# EUROPÄISCHE PATENTSCHRIFT

(11) **EP 3 688 487 B1**
(45) Veröffentlichungstag und Bekanntmachung des Hinweises auf die Patenterteilung: **09.07.2025**
(21) Anmeldenummer: 18788996.9
(22) Anmeldetag: 12.09.2018
(51) Int. Cl.: G01S 13/931, G01S 13/89

(54) **VERFAHREN UND SYSTEM ZUM KARTIEREN UND LOKALISIEREN EINES FAHRZEUGS BASIEREND AUF RADARMESSUNGEN**
METHOD AND SYSTEM FOR MAPPING AND LOCATING A VEHICLE BASED ON RADAR MEASUREMENTS
PROCÉDÉ ET SYSTÈME DE CARTOGRAPHIE ET DE LOCALISATION D'UN VÉHICULE À PARTIR DE MESURES RADAR

(30) Priorität: 26.09.2017 DE 102017217065
(43) Veröffentlichungstag der Anmeldung: 05.08.2020
(73) Patentinhaber: Robert Bosch GmbH, 70442 Stuttgart (DE)
(72) Erfinder: PASSMANN, Christian, 31199 Diekholzen (DE); ZAUM, Daniel, 31157 Sarstedt (DE); ABELING, Peter Christian, 30171 Hannover (DE)
(86) Internationale Anmeldenummer: PCT/EP2018/074678
(87) Internationale Veröffentlichungsnummer: WO 2019/063299

(56) Entgegenhaltungen:
- WO-A1-2007/051972
- DE-A1- 102015 003 666
- US-A1- 2017 227 647
- F. SCHUSTER ET AL: "Robust localization based on radar signal clustering", 2016 IEEE INTELLIGENT VEHICLES SYMPOSIUM (IV), 19 June 2016 (2016-06-19), pages 839 - 844, XP055534005, ISBN: 978-1-5090-1821-5, DOI: 10.1109/IVS.2016.7535485

## Beschreibung

Die Erfindung betrifft ein Verfahren zum Kartieren einer Fahrzeugumgebung mindestens eines Fahrzeugs und zum Lokalisieren des mindestens einen Fahrzeugs sowie ein System zum Durchführen eines derartigen Verfahrens.

### Stand der Technik

Derzeitige autonome oder teilautonome Fahrzeuge sind stark von bereitgestellten kartografischen Informationen abhängig. Die kartografischen Informationen werden zum Planen von Routen und zum Ermitteln der Position der Fahrzeuge verwendet. Die kartografischen Informationen bzw. Karten liegen hierbei üblicherweise in mehreren Ebenen vor. Eine erste Ebene wird beispielsweise zum Planen eines präzisen Spurverlaufs und von Fahrmanövern genutzt. Durch diese Daten können die autonomen oder teilautonomen Fahrzeuge eine Spur halten oder anpassen. Eine weitere Ebene weist detektierbare Objekte auf, welche durch fahrzeuginterne Sensoren detektiert und durch einen Abgleich mit den vorhandenen Informationen der Informationsebene identifiziert werden können. Anhand der identifizierten Objekte können die Fahrzeuge ihre relative Position zu den Objekten und somit auf der Karte ermitteln. In einer weiteren Informationsebene der Karte können sich dynamisch verändernde Informationen, wie beispielsweise Straßenverhältnisse, Wetterbedingungen, Parkplatzinformationen oder Verkehrsaufkommen, hinterlegt sein.

Zum Ermöglichen von autonomen oder teilautonomen Fahrfunktionen müssen diese kartografischen Informationen eine hohe Aktualität und eine hohe räumliche Genauigkeit aufweisen.

DE 10 2015 003 666 A1 beschreibt ein Verfahren zum Verarbeiten von Messdaten von Radarsensoren. Die Messdaten werden zu Clustern zusammengefasst und zum Erzeugen einer digitalen Karte gespeichert. Die Cluster werden basierend auf ermittelten räumlichen Häufungen von Messdaten innerhalb definierter Cluster-Radien gebildet. Die jeweiligen Cluster können mit Hilfe einer Gewichtung bei der Erstellung der digitalen Karte berücksichtigt werden. Werden Cluster ermittelt, welche mit bereits gespeicherten Clustern übereinstimmen, erfolgt eine Aktualisierung der bereits gespeicherten Cluster.

### Offenbarung der Erfindung

Die der Erfindung zugrunde liegende Aufgabe kann darin gesehen werden, ein Verfahren und ein System zum Erstellen und Aktualisieren einer Karte sowie zum Identifizieren von mindestens einer Fahrzeugposition auf der Karte vorzuschlagen, bei welchen wachsende Messfehler zumindest reduziert werden.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt der Erfindung wird ein Verfahren zum Kartieren einer Fahrzeugumgebung mindestens eines Fahrzeugs und zum Lokalisieren des mindestens einen Fahrzeugs bereitgestellt. Erfindungsgemäß werden in einem Schritt Messdaten der Fahrzeugumgebung durch mindestens einen Radarsensor des mindestens einen Fahrzeugs ermittelt. Die Messdaten des mindestens einen Radarsensors werden anschließend aggregiert und mit bereits vorhandenen aggregierten Messdaten verglichen. Basierend auf dem Vergleich zwischen den aggregierten Messdaten und den bereits vorhandenen aggregierten Messdaten werden die aggregierten Messdaten durch Reduzieren von Messfehlern optimiert, wobei die aggregierten Messdaten an die bereits vorhandenen aggregierten Messdaten angepasst oder interpoliert werden. Anhand der optimierten aggregierten Messdaten wird eine Karte erstellt oder aktualisiert. Durch Vergleichen der ermittelten Messdaten mit der erstellten oder aktualisierten Karte wird das mindestens eine Fahrzeug lokalisiert.

Erfindungsgemäß bilden die aggregierten Messdaten Knoten, wobei zum Vergleichen mit bereits vorhandenen aggregierten Messdaten Verbindungswege zwischen den Knoten gebildet und verglichen werden. Hierdurch kann das Verfahren analog zum sogenannten "graph SLAM" bzw. zum simultanen Lokalisierungs- und Kartenerstellungsverfahren Knoten und Kanten generieren und diese zum Vergleichen und Optimieren der kartografischen Informationen verwenden.

Durch das Verfahren kann von mindestens einem Fahrzeug eine Karte mit relevanten kartografischen Informationen erstellt oder aktualisiert werden. Insbesondere können durch mehrere wiederholte Messungen die Genauigkeiten der Karte erhöht werden. Durch das Verfahren können auch bestehende Karten vergrößert und optimiert werden.

Bei dem Verfahren werden insbesondere Radarmessdaten durch das mindestens eine Fahrzeug ermittelt und anschließend aggregiert. Durch die Aggregation der Messdaten können aus den ermittelten Messdaten zusammenhängende Punktwolken identifiziert werden, welche zum Reduzieren einer Gesamtzahl an Messdaten dienen kann. Dies kann gerade bei mehreren durchgeführten Messungen oder bei mehreren parallel betriebenen Radarsensoren eine Messdatenmenge reduzieren und die Geschwindigkeit des Verfahrens erhöhen. Ein Teil der ermittelten Messdaten kann auch durch Eingrenzen der möglichen Fahrzeugumgebung aussortiert werden.

Die aggregierten bzw. kondensierten Punktwolken der Messdaten können mit bereits ermittelten Punktwolken verglichen und untereinander abgestimmt werden. Als Teil dieses Vorgangs können beispielsweise Abstände zwischen den Punktwolken definiert und derart miteinander verglichen werden, dass Abweichungen der ermittelten Messdaten minimiert werden. Die Abstände zwischen den Punktwolken bzw. den gruppierten Punktwolken können auch durch eine auf den Radarmesswerten durchgeführten Odometrie ermittelt werden.

Die Fehleroptimierten Messdaten bzw. als gruppierte Punktwolken vorliegenden Messdaten unterschiedlicher Messungen werden zum Erstellen einer Karte verwendet. Hierfür können weitere Korrekturen, wie beispielsweise geometrische Entzerrung oder Ausrichtung der jeweiligen Messdaten zu bestehenden Messdaten, durchgeführt werden.

Nach dem Erstellen der Karte oder Hinzufügen von Messdaten zum Aktualisieren der Karte kann die Karte in einem weiteren Schritt komprimiert werden. Hierdurch kann ein Speicherplatzbedarf der Karte reduziert werden, sodass ein schneller Zugriff auf die Karte durch mindestens ein Fahrzeug möglich ist.

Basierend auf der erstellten Karte können die von mindestens einem Fahrzeug ermittelten Radarmessdaten zum Lokalisieren des mindestens einen Fahrzeugs verwendet werden. Hierfür werden die ermittelten Messdaten im Hinblick auf eine Übereinstimmung mit der Karte abgeglichen. Dieser Vorgang kann beispielsweise in einer externen Servereinheit oder auf einer Cloud durchgeführt werden.

Gemäß einem Ausführungsbeispiel des Verfahrens werden die Messdaten des mindestens einen Radarsensors durch eine Clusteranalyse aggregiert. Durch die Clusteranalyse können Ähnlichkeitsstrukturen unter den ermittelten Messdaten und den bereits hinterlegten Messdaten gefunden werden. Hierdurch können Messdaten aus mehreren Messungen auf wenige aussagekräftige Messdaten komprimiert werden und somit Abweichungen und Messfehler ausgleichen.

Nach einem Ausführungsbeispiel des Verfahrens werden die Messdaten des mindestens einen Radarsensors gefiltert. Durch einen Filter kann die Anzahl an ermittelten Messdaten für die weitere Verarbeitung bzw. Berechnung reduziert werden. Insbesondere können unlogische oder außerhalb eines Abtastmusters liegende Messdaten gelöscht werden. Des Weiteren können maschinelle Lernprozesse, wie beispielsweise lernfähige neuronale Netze, zum Interpretieren und Filtern der ermittelten Messwerte genutzt werden.

Erfindungsgemäß wird mindestens ein Knoten basierend auf mindestens einer Messdatenwolke gebildet. Die Messdatenwolken können beispielsweise durch einen sogenannten "Iterative Closest Point" Algorithmus oder durch einen beliebigen Punkte-Anpassungs-Algorithmus aufeinander ausgerichtet und miteinander in Kongruenz gebracht werden. Hierdurch kann eine verteilte Messdatenwolke verdichtet werden, sodass die Genauigkeit weiterer Berechnungen erhöht werden kann.

Nach einem Ausführungsbeispiel des Verfahrens werden die aggregierten Messdaten mit Messdaten mindestens eines zweiten Sensors zum Reduzieren von Messfehlern verglichen. Zusätzlich kann mindestens ein weiterer Sensor zum Reduzieren der Fehler der ermittelten Radarmessdaten verwendet werden. Es können beispielsweise LIDAR-Sensoren oder kamerabasierte Sensoren zum Detektieren von markanten Objekten oder geometrischen Formen in der Fahrzeugumgebung genutzt werden. Diese Merkmale können mit den Radarmessdaten verglichen werden. Hierdurch können fehlerhafte Messdaten aussortiert oder optimiert werden, sodass eine aus den Messwerten erzeugbare Karte eine höhere Genauigkeit aufweisen kann.

Gemäß einem Ausführungsbeispiel des Verfahrens wird die Karte durch Überlagern mit optimierten aggregierten Messdaten aktualisiert. Eine Karte kann durch das Verfahren technisch besonders einfach aktualisiert werden, wenn neu ermittelte Messwerte die bereits hinterlegten Messwerte überlagern bzw. parallel dazu gespeichert werden. Alternativ können vorhandene Messdaten durch neue Messdaten ersetzt werden.

Nach einem Ausführungsbeispiel des Verfahrens wird die erstellte Karte komprimiert. Hierdurch kann ein Speicherplatzbedarf der Karte reduziert werden. Insbesondere bei einer Bereitstellung der Karte durch eine externe Servereinheit können dadurch relevante kartografische Informationen auch bei ortsabhängig beeinträchtigten Verbindungsgeschwindigkeiten schnell durch ein Fahrzeug abrufbar sein.

Gemäß einem Ausführungsbeispiel des Verfahrens wird die erstellte Karte durch Clusterbildung komprimiert, wobei jedem Cluster der erstellten Karte ein Zeitstempel zugewiesen wird und bei einer Aktualisierung der Karte korrespondierende ältere Cluster durch aktuelle Cluster ersetzt werden. Die aus den ermittelten und komprimierten Messdaten erstellte oder aktualisierte Karte kann in einem weiteren Schritt im Rahmen einer Clusterbildung in ihrem Speicherplatzbedarf reduziert werden. Hierdurch kann verhindert werden, dass die Karte aufgrund ihrer Datengröße und Messwertdichte unbrauchbar wird. Dieser Vorgang kann auch zum Aktualisieren von bestehenden Karten verwendet werden. Hierfür können die zum Aktualisieren der Karte verwendeten Messdaten zuvor in Cluster zusammengefasst werden, sodass die Karte Clusterweise aktualisiert oder erweitert werden kann. Insbesondere können einzelne Cluster der Karte mit Zeitstempeln versehen sein. Hierdurch können bei einem Aufnehmen aktueller Kartencluster die veralteten Cluster gelöscht werden. Insbesondere können aktuelle Cluster mit einer höheren Gewichtung für weitere Berechnungen oder Routenplanungen einbezogen werden.

Nach einem Ausführungsbeispiel des Verfahrens wird die komprimierte Karte zum Erkennen von Objekten analysiert. Die erstelle und anschließend komprimierte Karte kann im Hinblick auf identifizierbare Objekte und Merkmale überprüft werden. Insbesondere können die ermittelten und in Form der Karte verwendeten Messwerte durch einen beaufsichtigten oder einen unbeaufsichtigten maschinellen Lernprozess oder durch neuronale Netzwerke auf Zusammenhänge und erkennbare Objekte oder Merkmale analysiert werden. Hierdurch können beispielsweise Landmarken, geografische oder geometrische Merkmale aus den Messwerten extrahiert werden. Dies kann eine Lokalisierung des mindestens einen Fahrzeugs vereinfachen oder beschleunigen. Insbesondere kann eine derartige Karte auch von Fahrzeugen ohne Radarsensoren genutzt werden, sofern die extrahierten Merkmale von beispielsweise optischen Sensoren ermittelt und verglichen werden können.

Gemäß einem Ausführungsbeispiel des Verfahrens wird die erstellte Karte mit mindestens einer geografischen Karte verknüpft. Hierdurch kann die erstellte oder aktualisierte Karte mit weiteren Informationsebenen verbunden werden. Es können beispielsweise Verkehrsinformationen oder ortsabhängige Wetterdaten bereitgestellt werden. Es können auch konventionelle GPS-Daten zum Erhöhen einer Genauigkeit und zum Überprüfen der ermittelten Messdaten verwendet werden. Hierdurch kann ein lokalisiertes Fahrzeug auch auf den verknüpften Karten örtlich präzise zugeordnet werden. Die Lokalisierung des mindestens einen Fahrzeugs kann vorzugsweise durch Messpunktvergleich bzw. durch Filterung der Messpunkte mit den Kartendaten realisiert werden. Des Weiteren können die ermittelten Messpunkte als dreidimensionale Messpunktwolke im Vorfeld zu einer zweidimensionalen oder einer 2.5-dimensionalen Punktwolke konvertiert werden, sodass ein Vergleich mit einer entsprechend angelegten Karte möglich ist.

Nach einem weiteren Aspekt der Erfindung wird ein System bereitgestellt. Das System weist mindestens ein Fahrzeug mit mindestens einem Radarsensor zum Ermitteln von Messdaten auf. Das System weist zusätzlich mindestens einer externe Verarbeitungseinheit oder mindestens eine interne in dem mindestens einem Fahrzeug angeordnete Verarbeitungseinheit zum Erstellen einer Karte basierend auf den ermittelten Messdaten und zum Lokalisieren des mindestens einen Fahrzeugs anhand der ermittelten Messdaten auf. Das System ist dazu eingerichtet, ein erfindungsgemäßes Verfahren zum Kartieren einer Fahrzeugumgebung mindestens eines Fahrzeugs und zum Lokalisieren des mindestens einen Fahrzeugs durchzuführen.

Durch das System können Fahrzeuge alleine oder in Kombination mit mindestens einen externen Servereinheit Karten durch Radarmessdaten erstellen und aktualisieren. Insbesondere kann somit eine aktuelle Bereitstellung von präzisen und hochaktuellen kartografischen Informationen für autonome oder teilautonome Fahrfunktionen bereitgestellt werden. Die Verarbeitung der Messdaten kann beispielsweise auf einer externen Servereinheit oder auf mehreren externen Servereinheiten erfolgen. Mehrere externe Servereinheiten können hier einen Cloud-Dienst zum Auswerten und Bereitstellen der Messdaten bzw. kartografischen Informationen bilden.

Das erfindungsgemäße Verfahren kann durch Verwendung von einem "full SLAM"- bzw. einem "graph SLAM"-Verfahren in einer Fahrzeugumgebung ermittelte Radarmesswerte kondensieren bzw. komprimieren und somit zusammenhängende Messpunktwolken erzeugen. Hierfür kann eine Clusteranalyse oder eine Aussortierung der Messdaten durchgeführt werden.

Die komprimierten Messdaten können mit bereits vorhandenen Messwerten verglichen werden. Hierbei können Messunsicherheiten und Abweichungen der Messungen bei einem Wiedererkennen von Messwerten oder Messwertmustern reduziert werden.

Die derart optimierten Messwerte werden anschließend zum Erzeugen oder Aktualisieren einer Karte genutzt. Damit die resultierende Karte einen geringen Speicherplatzbedarf aufweist, kann die Karte in einem weiteren Schritt komprimiert oder in Cluster unterteilt werden.

Die von einem Fahrzeug ermittelten Radarmessdaten können mit den als Karte hinterlegten Messwerten verglichen werden, sodass das Fahrzeug auf der Karte geortet werden kann.

Im Folgenden wird anhand von einer stark vereinfachten schematischen Darstellung ein bevorzugtes Ausführungsbeispiele der Erfindung näher erläutert.

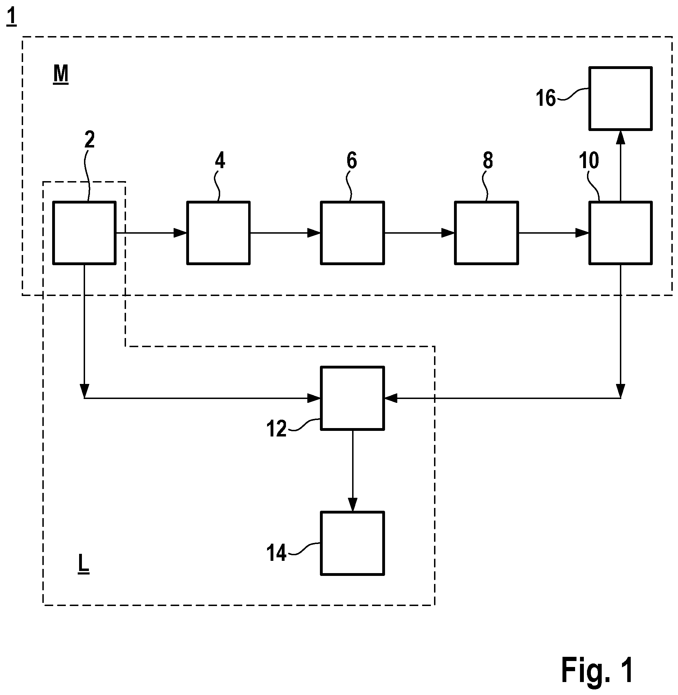

Die Figur 1 zeigt ein schematisches Ablaufdiagramm des Verfahrens 1 zum Kartieren einer Fahrzeugumgebung mindestens eines Fahrzeugs und zum Lokalisieren des mindestens einen Fahrzeugs gemäß einem ersten Ausführungsbeispiel.

In einem ersten Schritt werden durch mindestens einen Radarsensor Messdaten der Fahrzeugumgebung des mindestens einen Fahrzeugs ermittelt 2. Der mindestens eine Radarsensor kann dabei in oder auf dem mindestens einem Fahrzeug angeordnet sein. Der mindestens eine Radarsensor kann kontinuierlich oder in definierten zeitlichen Abständen Radarwellen erzeugen und basierend auf einer Time-of-Flight-Analyse von Objekten und der Fahrzeugumgebung reflektierte Radarwellen empfangen. Hierfür weist der Radarsensor eine elektronische Ansteuerung und eine Auswerteeinheit zum Steuern der Erzeugung von Radarwellen und zum Auswerten von reflektierten Radarwellen. Die reflektierten und von dem Radarsensor empfangenen Radarwellen werden in Form von Messdaten bzw. Messpunkten ermittelt und zumindest temporär gespeichert.

In einem weiteren Schritt werden die Messdaten aggregiert 4. Dies dient insbesondere zum Reduzieren einer Messdatendichte der ermittelten Messdaten und zum Reduzieren eines Speicherplatzbedarfs der Messdaten. Somit können die aggregierten Messdaten beispielsweise von dem mindestens einem Fahrzeug zu einer oder mehreren externen Servereinheiten über eine drahtlose Kommunikationsverbindung übertragen werden. Die eine oder mehrere externe Servereinheiten können anschließend mit einer höheren bereitgestellten Rechenleistung die weiteren Verarbeitungsschritte übernehmen. Alternativ kann das mindestens eine Fahrzeug selbst durch eine interne Steuereinheit bzw. Verarbeitungseinheit die Verarbeitungsschritte durchführen.

Bei der Aggregation der Messdaten 4 werden aus den ermittelten Messdaten nur diejenigen Messdaten bzw. Messpunkte behalten, welche logisch und aussagekräftig sind. Insbesondere können bei diesem Schritt 4 auf Geisterziele hindeutende Messdaten gelöscht werden. Hierfür kann beispielsweise eine dichtebasierte räumliche Clusteranalyse oder ein sogenannter k-means Algorithmus auf die ermittelten Messdaten angewandt werden. Bei der Aggregation können auch Abstrahlrichtungen der erzeugten und der empfangenen Radarwellen berücksichtigt werden. Durch diesen Schritt können die ermittelten Messdaten beispielsweise zu Messpunktwolken bzw. zu Gruppen aus Messpunkten zusammengefasst werden, wobei die Gruppen jeweils von einem Empfangswinkel der reflektierten Radarwellen abhängen können.

In einem weiteren Schritt werden die zuvor aggregierten Messdaten gespeichert. Wenn bereits vorhandene aggregierte Messdaten in einem Speicher hinterlegt sind kann in diesem Schritt ein Vergleich der aktuellen aggregierten Messdaten mit bereits gespeicherten aggregierten Messdaten durchgeführt werden 6. Hierfür können beispielsweise die Abstände zwischen den gebildeten Gruppen gemessen oder berechnet werden und mit Abständen der bereits hinterlegten Daten verglichen werden. Des Weiteren können Muster zwischen den unterschiedlichen Daten verglichen werden. Durch einen derartigen Vergleich können kontinuierlich wachsende Messfehler des Verfahrens reduziert werden 8.

Hierfür werden die neu ermittelten und aggregierten Messdaten an die bereits hinterlegten Messwerte angepasst oder interpoliert.

Mit den im vorherigen Schritt 8 optimierten Messdaten wird anschließend eine Karte aus den radarbasierten Messdaten erstellt 10. Wenn aus früheren Messungen eine Karte bereits erstellt wurde, werden die optimierten Messdaten zum Aktualisieren der Karte verwendet 10.

Die erstellte Karte kann nun zum Lokalisieren 12 des mindestens einen Fahrzeugs verwendet werden. Hierfür werden die von mindestens einem Fahrzeug ermittelten 2 Messdaten mit den als eine Karte hinterlegten Messdaten 10 verglichen 12. Eine Übereinstimmung der ermittelten Messdaten 2 mit den als Karte hinterlegten Messdaten 10 kann zu einer Position 14 des mindestens einen Fahrzeugs auf der Karte führen.

Nach einem Erstellen der Karte aus den optimierten Messdaten 10, kann die Karte zusätzlich komprimiert werden 16.

Das Verfahren 1 weist somit einen Teil zur Generierung einer Karte M und einen Teil zur Lokalisierung L mindestens eines Fahrzeugs anhand der generierten Karte auf.

## Patentansprüche

1. Verfahren (1) zum Kartieren (M) einer Fahrzeugumgebung mindestens eines Fahrzeugs und zum Lokalisieren (L) des mindestens einen Fahrzeugs, wobei
- Messdaten der Fahrzeugumgebung durch mindestens einen Radarsensor des mindestens einen Fahrzeugs ermittelt werden (2),
- die Messdaten des mindestens einen Radarsensors aggregiert werden (4),
- die aggregierten Messdaten (4) mit bereits vorhandenen aggregierten Messdaten verglichen werden (6),
- basierend auf dem Vergleich zwischen den aggregierten Messdaten mit den bereits vorhandenen aggregierten Messdaten die aggregierten Messdaten durch Reduzieren von Messfehlern optimiert werden (8), wobei,
- anhand der optimierten aggregierten Messdaten eine Karte erstellt oder aktualisiert wird (10) und
- durch Vergleichen (12) der ermittelten Messdaten mit der erstellten Karte das mindestens eine Fahrzeug auf der erstellten oder aktualisierten Karte lokalisiert wird (14),
**dadurch gekennzeichnet, dass** die aggregierten Messdaten (4) an die bereits vorhandenen aggregierten Messdaten angepasst oder interpoliert werden, wobei mindestens ein Knoten basierend auf mindestens einer Messdatenwolke gebildet wird, wobei die aggregierten Messdaten (4) Knoten bilden und zum Vergleichen mit bereits vorhandenen aggregierten Messdaten Verbindungswege zwischen den Knoten gebildet und verglichen werden.

2. Verfahren nach Anspruch 1, wobei die Messdaten des mindestens einen Radarsensors durch eine Clusteranalyse aggregiert werden (4).

3. Verfahren nach Anspruch 1 oder 2, wobei die Messdaten des mindestens einen Radarsensors gefiltert werden.

4. Verfahren nach einem der Ansprüche 1 bis 3, wobei die aggregierten Messdaten (4) mit Messdaten mindestens eines zweiten Sensors zum Reduzieren von Messfehlern verglichen (6, 8) werden.

5. Verfahren nach einem der Ansprüche 1 bis 4, wobei die Karte durch Überlagern mit optimierten aggregierten Messdaten aktualisiert wird (10).

6. Verfahren nach einem der Ansprüche 1 bis 5, wobei die erstellte Karte komprimiert wird (16).

7. Verfahren nach einem der Ansprüche 1 bis 6, wobei die erstellte Karte (10) durch Clusterbildung komprimiert wird (16), wobei jedem Cluster der erstellten Karte ein Zeitstempel zugewiesen wird und bei einer Aktualisierung der Karte korrespondierende ältere Cluster durch aktuelle Cluster ersetzt werden.

8. Verfahren nach Anspruch 6, wobei die komprimierte Karte (16) zum Erkennen von Objekten analysiert wird.

9. Verfahren nach einem der Ansprüche 1 bis 8, wobei die erstellte Karte mit mindestens einer geografischen Karte verknüpft wird.

10. System, aufweisend mindestens ein Fahrzeug mit mindestens einem Radarsensor zum Ermitteln von Messdaten (2) und mit mindestens einer externen oder internen Verarbeitungseinheit zum Erstellen einer Karte (10) basierend auf den ermittelten Messdaten und zum Lokalisieren (L) des mindestens einen Fahrzeugs anhand der ermittelten Messdaten (2), wobei das System dazu eingerichtet ist, ein Verfahren (1) zum Kartieren (M) einer Fahrzeugumgebung mindestens eines Fahrzeugs und zum Lokalisieren (L) des mindestens einen Fahrzeugs nach einem der vorhergehenden Ansprüche durchzuführen.

11. System nach Anspruch 10, wobei das System mittels der Verarbeitungseinheit dazu eingerichtet ist, Verarbeitungsschritte des Verfahrens gemäß einem der Ansprüche 1 bis 9 durchzuführen.

## Claims

1. Method (1) for mapping (M) a vehicle environment of at least one vehicle and for locating (L) the at least one vehicle, wherein
- measurement data relating to the vehicle environment are determined by at least one radar sensor of the at least one vehicle (2),
- the measurement data of the at least one radar sensor are aggregated (4),
- the aggregated measurement data (4) are compared with already available aggregated measurement data (6),
- the comparison between the aggregated measurement data and the already available aggregated measurement data is taken as a basis for optimizing the aggregated measurement data by reducing measurement errors (8), wherein
- the optimized aggregated measurement data are used to create or update a map (10) and
- comparison (12) of the determined measurement data with the created map is used to locate the at least one vehicle on the created or updated map (14), **characterized in that** the aggregated measurement data (4) are matched to the already available aggregated measurement data or interpolated, wherein at least one node is formed on the basis of at least one measurement data cloud, wherein the aggregated measurement data (4) form nodes and comparison with already available aggregated measurement data involves connection paths between the nodes being formed and compared.

2. Method according to Claim 1, wherein the measurement data of the at least one radar sensor are aggregated by way of a cluster analysis (4).

3. Method according to Claim 1 or 2, wherein the measurement data of the at least one radar sensor are filtered.

4. Method according to one of Claims 1 to 3, wherein the aggregated measurement data (4) are compared with measurement data of at least one second sensor to reduce measurement errors (6, 8).

5. Method according to one of Claims 1 to 4, wherein the map is updated by superimposing optimized aggregated measurement data (10).

6. Method according to one of Claims 1 to 5, wherein the created map is compressed (16).

7. Method according to one of Claims 1 to 6, wherein the created map (10) is compressed by clustering (16), wherein each cluster of the created map is assigned a time stamp, and an update of the map results in corresponding older clusters being replaced by current clusters.

8. Method according to Claim 6, wherein the compressed map (16) is analysed to detect objects.

9. Method according to one of Claims 1 to 8, wherein the created map is linked to at least one geographical map.

10. System comprising at least one vehicle having at least one radar sensor for determining measurement data (2) and having at least one external or internal processing unit for creating a map (10) on the basis of the determined measurement data and for locating (L) the at least one vehicle on the basis of the determined measurement data (2), the system being designed to perform a method (1) for mapping (M) a vehicle environment of at least one vehicle and for locating (L) the at least one vehicle according to one of the preceding claims.

11. System according to Claim 10, wherein the system is designed to use the processing unit to perform processing steps of the method according to one of Claims 1 to 9.

## Revendications

1. Procédé (1) pour cartographier (M) un environnement de véhicule d'au moins un véhicule et pour localiser (L) l'au moins un véhicule,
- des données de mesure de l'environnement de véhicule étant déterminées par au moins un capteur radar de l'au moins un véhicule (2),
- les données de mesure de l'au moins un capteur radar étant agrégées (4),
- les données de mesure agrégées (4) étant comparées (6) à des données de mesure agrégées déjà présentes,
- sur la base de la comparaison entre les données de mesure agrégées et les données de mesure agrégées déjà présentes, les données de mesure agrégées étant optimisées par réduction des erreurs de mesure (8),
- une carte étant créée ou mise à jour à l'aide des données de mesure agrégées optimisées (10) et
- l'au moins un véhicule étant localisé (14) sur la carte créée ou mise à jour en comparant (12) les données de mesure déterminées avec la carte créée, **caractérisé en ce que** les données de mesure agrégées (4) sont interpolées ou adaptées aux données de mesure agrégées déjà présentes, au moins un nœud étant formé sur la base d'au moins un nuage de données de mesure, les données de mesure agrégées (4) formant des nœuds et des chemins de connexion entre les nœuds étant formés et comparés à des fins de comparaison avec des données de mesure agrégées déjà présentes.

2. Procédé selon la revendication 1, les données de mesure de l'au moins un capteur radar étant agrégées (4) par une analyse par grappes.

3. Procédé selon la revendication 1 ou 2, les données de mesure de l'au moins un capteur radar étant filtrées.

4. Procédé selon l'une des revendications 1 à 3, les données de mesure agrégées (4) étant comparées (6, 8) à des données de mesure d'au moins un deuxième capteur afin de réduire les erreurs de mesure.

5. Procédé selon l'une des revendications 1 à 4, la carte étant mise à jour (10) par superposition avec des données de mesure agrégées optimisées.

6. Procédé selon l'une des revendications 1 à 5, la carte créée étant compressée (16).

7. Procédé selon l'une des revendications 1 à 6, la carte créée (10) étant compressée (16) par formation de grappes, un horodatage étant attribué à chaque grappe de la carte créée et, lors d'une mise à jour de la carte, les grappes plus anciennes correspondantes étant remplacées par des grappes actuelles.

8. Procédé selon la revendication 6, la carte compressée (16) étant analysée en vue de reconnaître des objets.

9. Procédé selon l'une des revendications 1 à 8, la carte créée étant liée à au moins une carte géographique.

10. Système, possédant au moins un véhicule comprenant au moins un capteur radar pour déterminer des données de mesure (2) et au moins une unité de traitement externe ou interne destinée à créer une carte (10) sur la base des données de mesure déterminées et pour localiser (L) l'au moins un véhicule à l'aide des données de mesure déterminées (2), le système étant conçu pour mettre en œuvre un procédé (1) pour cartographier (M) un environnement de véhicule d'au moins un véhicule et pour localiser (L) l'au moins un véhicule selon l'une des revendications précédentes.

11. Système selon la revendication 10, le système étant configuré, au moyen de l'unité de traitement, pour exécuter les étapes de traitement du procédé selon l'une des revendications 1 à 9.
